# EUROPÄISCHE PATENTSCHRIFT

(11) **EP 2 889 529 B1**
(45) Veröffentlichungstag und Bekanntmachung des Hinweises auf die Patenterteilung: **03.04.2019**
(21) Anmeldenummer: 14193646.8
(22) Anmeldetag: 18.11.2014
(51) Int. Cl.: F21S 41/24, F21S 41/32, F21S 43/14, F21S 43/20, F21S 43/237, F21S 43/245, F21S 43/247, F21S 43/249, F21S 43/40, F21S 43/50, G02B 6/00

(54) **Kraftfahrzeugleuchte mit einem linien- oder flächenhaften Erscheinungsbild**
Motor vehicle light with a linear or flat appearance
Éclairage de véhicule automobile doté d'une apparence extensive ou linéaire

(30) Priorität: 27.12.2013 DE 102013227195
(43) Veröffentlichungstag der Anmeldung: 01.07.2015
(73) Patentinhaber: Automotive Lighting Reutlingen GmbH, 72762 Reutlingen (DE)
(72) Erfinder: Ladenburger, Andreas, 89075 Ulm (DE)
(74) Vertreter: DREISS Patentanwälte PartG mbB

(56) Entgegenhaltungen:
- EP-A2- 2 541 128
- WO-A1-2012/120441
- DE-A1- 10 314 257
- DE-A1-102010 012 745
- DE-A1-102011 001 769
- FR-A1- 2 934 353
- JP-A- 2005 285 667
- JP-A- 2010 170 806
- US-A1- 2009 027 911

## Beschreibung

Die vorliegende Erfindung betrifft eine Kraftfahrzeugleuchte nach dem Oberbegriff des Anspruchs 1. Eine solche Kraftfahrzeugleuchte ist aus der WO 2012/120441 A1 und aus der JP 2005-285667 A bekannt.

Bekannt sind auch stabförmige Lichtleiter, wobei unter einem stabförmigen Lichtleiter hier ein Lichtleiter verstanden wird, dessen in Lichttransportrichtung gemessene Länge ein Mehrfaches seiner quer zu der Lichttransportrichtung gemessenen Abmessungen, die man zur Abgrenzung von dem Begriff der Länge als Breite oder Dicke bezeichnen kann, beträgt. Die Stabform kann geradlinig oder im Raum gekrümmt sein, wie es zum Beispiel von ringförmigen Tagfahrlicht-Leuchten aus dem Straßenverkehr bekannt ist. Es existiert eine Vielzahl von Kraftfahrzeugleuchten, die eine für ihre Funktion notwendige Lichtverteilung mit Hilfe von Lichtleitern erzeugen.

Die Lichtleiter werden dabei in der Regel mit Licht gespeist, das von Halbleiterlichtquellen wie Leuchtdioden oder Laserdioden ausgeht. Dieses Licht wird an einer oder mehreren Stellen in den stabförmigen Lichtleiter eingekoppelt und durch an Wänden des Lichtleiters auftretende interne Totalreflexionen nahezu verlustfrei weitergeleitet. Eine Vielzahl von optischen Auskoppelelementen lenkt Anteile des Lichts dann so um, dass es im Folgenden an einer Grenzfläche so steil auftrifft, dass es dort keine interne Totalreflexion mehr erfährt, sondern aus dem Lichtleiter austritt und entsprechend einen Beitrag zur Lichtverteilung leistet. Soll ein möglichst homogenes Erscheinungsbild erreicht werden, wird der Lichtleiter so gestaltet, dass die Größe der Auskoppelelemente im Verlauf des Lichtleiters mit zunehmender Entfernung vom Ort der Lichteinkopplung zunimmt.

Wichtig ist im Allgemeinen und für die Funktionen Tagfahrlicht und Blinklicht im Besonderen, dass das ausgekoppelte Licht eine gewisse Fokussierung erfährt. Dies ist notwendig, um eine regelkonforme Lichtverteilung zu erzeugen, bei der in bestimmten Raumwinkelbereichen bestimmte Mindesthelligkeitswerte erreicht werden müssen. Eine Leuchtdiode mit ebener Lichtaustrittsfläche emittiert ihr Licht zum Beispiel in einen Halbraum, also zum Beispiel in einen Winkelbereich von - 90° bis + 90° sowohl in vertikaler als auch in horizontaler Richtung, wobei die Flächennormale der Lichtaustrittsfläche der Leuchtdiode in diesem Beispiel senkrecht zur vertikalen und senkrecht zur horizontalen Richtung liegt. Eine regelkonforme Signallichtverteilung für Kraftfahrzeuge erfordert dagegen bestimmte Helligkeitswerte nur in einem Winkelbereich von - 20° bis + 20° in horizontaler Richtung und von - 10° bis + 10° in vertikaler Richtung, wobei die Winkel jeweils zu einer zur Fahrzeuglängsachse parallelen Hauptabstrahlrichtung der Leuchte zu beziehen sind.

Um das Licht der Lichtquelle in einen solchen Winkelbereich einer regelkonformen Lichtverteilung zu konzentrieren, wird das quer zur Hauptlichtausbreitungsrichtung des Lichtes im Lichtleiter quer liegende Querschnittsprofil des Lichtleiters im Frontbereich überwölbt oder mit einem Radius ausgeführt. Der Frontbereich ist dabei der Bereich, der die Lichtaustrittsfläche des Lichtleiters bildet. Das mit den Auskoppelelementen generierte Licht wird durch Lichtbrechung gebündelt, die beim Lichtaustritt aus dieser Fläche auftritt.

Durch die runde oder gewölbte Lichtaustrittsfläche des Lichtleiters, die in der Regel mit einem runden, insbesondere kreisförmigen oder elliptischen Querschnitt des gesamten Lichtleiters einhergeht, ergeben sich zwangsläufig gewisse Einschränkungen in der Gestaltungsfreiheit beim Entwurf der Kraftfahrzeugleuchte. Die unter der Berücksichtigung von Designvorgaben einzugehenden Kompromisse zwischen optischer Funktion und optischer Wirkung führen im Ergebnis zu Lichtleitern mit kreis- oder ellipsenförmigem Querschnitt.

Die Führungslinie oder Mittelfaser des Lichtleiters, also die Kurve im Raum, welcher der Lichtleiter folgen soll, kann nicht beliebig sein. Es ist immer ein Mindestradius einzuhalten, damit die Fortleitung des Lichts mittels Totalreflexion gewährleistet ist. Bei kleinen Radien der Führungslinie trifft im Inneren des Lichtleiters propagierendes Licht tendenziell steiler auf die Wände auf als bei größeren Radien der Führungslinie, was zu einem unerwünschten Lichtaustritt führen kann. Dieser Mindestradius hängt linear vom Durchmesser des Lichtleiterquerschnitts ab. Ein dickerer Lichtleiter muss eine Führungslinie mit größeren Mindestradien haben. Die gewünschte Bündelungswirkung erfordert eine gewisse Mindestbreite des Lichtleiters.

Die Breite des Lichtleiters bzw. der Querschnitt des Lichtleiters kann entlang des Verlaufs der Führungslinie nicht beliebig variiert werden, weil der Transport des Lichts mittels Totalreflexion gewährleistet bleiben muss. Eine Verjüngung des Lichtleiterquerschnitts führt zum Beispiel zu einer Vergrößerung des Öffnungswinkels des Lichtbündels, in dem das Licht im Lichtleiter propagiert. Als Folge tritt ein steilerer Lichteinfall auf die Grenzflächen und damit eine unerwünscht erhöhte Austrittswahrscheinlichkeit auf.

Soll der Lichtleiter ein möglichst homogenes Erscheinungsbild haben, so dass der Verlauf der Helligkeit über der ganze Länge der Lichtaustrittsfläche möglichst konstant ist, bleibt immer ein Teil des Lichts am Ende des Lichtleiters ungenutzt. Dieses ungenutzte Licht tritt dann am Ende des Lichtleiters aus und führt zu unerwünschten hellen Stellen. Ein Verstecken dieser Lichtaustrittsstelle ist oft aus Platzgründen nicht möglich. Ein tieferes Einschneiden der Auskoppel-Elemente in den Lichtleiter, was eine verstärkte Auskopplung des Lichtes in erwünschte Raumrichtungen ermöglichen würde, ist nur begrenzt zielführend, weil dadurch die fokussierende Funktion der gewölbten Vorderfläche abgeschwächt wird. Außerdem kommt es dadurch zu einem gegenüber Nachbarstellen veränderten Leuchteindruck an dieser Stelle.

Eine konische Verjüngung des gesamten Lichtleiterprofils zum Ende hin ist nur begrenzt möglich, da die Bedingung für die Totalreflexion des sich dann weiter öffnenden Lichtbündels nicht mehr eingehalten wird. Es kommt dann zum ungewollten Lichtaustritt.

Es besteht daher ein Bedürfnis nach einer Kraftfahrzeugleuchte der eingangs genannten Art, mit der sich diese Forderungen nach einer Konzentration des Lichtes in einen vorgegebenen Raumwinkelbereich und nach einer möglichst großen Gestaltungsfreiheit verwirklichen lassen.

Diese Aufgabe wird mit den Merkmalen des Anspruchs 1 gelöst. Die vorliegende Erfindung unterscheidet sich von dem eingangs genannten Stand der Technik durch die kennzeichnenden Merkmale des Anspruchs 1.

Erfindungsgemäß erfolgt eine Fokussierung des Lichts durch das dem Lichtleiter im Lichtweg nachgeschaltete weitere optische Element, das zum Beispiel eine walzenartige Lichtscheibe oder ein Reflektor sein kann. Dadurch wird der Lichtleiter von der Aufgabe der Fokussierung entlastet oder ganz befreit, was zu den angestrebten Freiheitsgraden führt. Da das fokussierende Element optisch vom Lichtleiter entkoppelt ist, ergibt sich bei der erfindungsgemäßen Kraftfahrzeugleuchte eine größere gestalterische Freiheit als bei einer herkömmlichen Kraftfahrzeugleuchte.

Dadurch, dass die Lichtaustrittsfläche des Lichtleiters in einer quer zur Führungslinie liegenden Raumrichtung geradlinig verläuft, ist die Lichtaustrittsfläche des Lichtleiters komplett von der Fokussierungsaufgabe befreit. Durch die Entlastung und/oder Befreiung des Lichtleiters von der optischen Funktion der Fokussierung ist die Führungslinie, welcher der Lichtleiter folgen soll, weniger starken Einschränkungen unterworfen als dies bei einem gekrümmt berandeten Lichtleiter nach dem Stand der Technik der Fall ist. Da der eigentliche Lichtleiter bei der Erfindung wegen des Wegfalls der Bündelungsfunktion dünner ausfallen kann als beim Stand der Technik, ergibt sich ein kleinerer Mindestradius seiner Führungslinie, der eingehalten werden muss, um die Totalreflexion aufrecht zu erhalten.

Der Lichtweg darf also stärkere Richtungsänderungen haben als bei einem herkömmlichen Lichtleiter. Der Lichtleiter darf also insbesondere kleinere Krümmungsradien aufweisen als bei einem herkömmlichen Lichtleiter Die Breite der auszuleuchtenden Linie kann entlang des Linienverlaufs nahezu beliebig variiert werden, indem das fokussierende Element entsprechend angepasst wird.

Der bevorzugt im Vergleich zum Stand der Technik dünnere Lichtleiter ist davon unberührt, so dass die Fortleitung des Lichts mittels Totalreflexion weiter gewährleistet ist.

Dadurch, dass die quer zur Führungslinie liegenden Lichtleiterquerschnitte rechteckig sind, wird die Effizienz des optischen Systems verbessert: Soll der Lichtleiter ein möglichst homogen helles Erscheinungsbild haben, bei dem die Helligkeit über die ganze Länge möglichst gleichmäßig ist, ist ein Lichtleiter mit rechteckigem Querschnitt von Vorteil. Anders als bei runden Lichtleiterquerschnitten, bei denen immer ein Teil des Lichts am Ende des Lichtleiters ungenutzt bleibt, kann beim rechteckigen Lichtleiterquerschnitt das gesamte Licht nutzbar zur Auskopplung gebracht werden. Dies liegt daran, dass ein rechteckiger Lichtleiter treppenartig verjüngt werden kann und am Ende spitz auslaufen kann.

Ein tieferes Einschneiden der Einkoppel-Elemente in den Lichtleiter ist beim rechteckigen Lichtleiter problemlos möglich, da es keine fokussierende Funktion des Lichtleiters gibt, die verloren gehen kann. Es kommt dadurch auch nicht zu einem anderen Leuchteindruck an dieser Stelle. Eine mit zunehmender Entfernung vom Ort der Lichteinkopplung zunehmende Größe der Auskoppelelemente lässt sich bei rechteckigen Lichtleitern noch besser verwirklichen als bei runden Lichtleitern.

Muss ein Linienverlauf aus mehreren Lichtleitern zusammengesetzt werden, haben dünne Lichtleiter mit rechteckigem Querschnitt Vorteile. Dabei gilt der Lichtleiter insbesondere dann als dünn, wenn er im Verhältnis zur auszuleuchtenden Fläche als dünn erscheint. Dies ist zum Beispiel dann der Fall, wenn die Länge der auszuleuchtenden Fläche ein Mehrfaches ihrer Breite ist. Die Lichtleiter können besser nebeneinander oder hintereinander angeordnet werden als runde Lichtleiter. Die rechteckige Form des Lichtleiters hat insbesondere den Vorteil, dass zwei Lichtleiter nebeneinander verlaufen können und der zusammengesetzte Lichtaustritt genauso aussieht wie der Lichtaustritt eines einzelnen Lichtleiters.

Mit dem Konzept dünner, rechteckiger Lichtleiter in der Verbindung mit dem fokussierenden optischen Element lassen sich insbesondere lange Konturen problemlos aus mehreren Lichtleitern zusammensetzen. Damit lassen sich insbesondere geschlossene oder offene ringförmige Konturen, Y-artige Konturen, Multifunktionslichtleiter und animierte Lichtleiter wie wischende Blinker verwirklichen.

Wenn eine Kontur oder eine Fläche durch mehrere Lichtleiter ausgeleuchtet werden soll, ist ein rechteckiger dünner Lichtleiter ebenfalls von Vorteil. Die Kombination zweier Lichtleiter zu einem langen Lichtleiter funktioniert mit einem rechteckigen Lichtleiter besser, weil er treppenartig spitz auslaufen kann. Der zweite Lichtleiter kann dann in den Raumbereich, der wegen des treppenartigen Auslaufens des ersten Lichtleiters nicht von dem ersten Lichtleiter eingenommen wird, hineinführen.

Für geschlossene Konturen, Ringkonturen oder Y-artige Konturen können die dünnen rechteckigen Lichtleiter besser aneinander vorbeigeführt werden. Unter einem Aneinandervorbeiführen wird dabei verstanden, dass die dünnen Lichtleiter nebeneinander in einen möglichst geringen Abstand zueinander verlaufen. Dabei wird angestrebt, dass sich die Lichtaustrittsflächen von in diesem Sinne benachbarten Lichtleitern möglichst lückenlos zu einer homogen hell leuchtenden Gesamtfläche zusammensetzen.

Bevorzugt ist auch, dass das im Lichtweg folgende optische Element ein transparenter Festkörper ist und in Ebenen, in denen senkrecht zur Führungslinie des Lichtleiters liegende Querschnitte des Lichtleiters liegen, eine plane Lichteintrittsfläche und eine aus der optisch dünneren Umgebung konvex erscheinende Lichtaustrittsfläche besitzt.

In dieser Ausgestaltung wird die fokussierende Funktion durch die innen liegende, der Lichtaustrittsfläche des Lichtleiters zugewandte Fläche des fokussierenden Elementes erfüllt. Das hat den Vorteil, dass die dem Betrachter zugewandte Lichtaustrittsfläche des zusätzlichen fokussierenden Elements flach sein kann, was aus gestalterischen Gründen gewünscht ist.

Eine weitere bevorzugte Ausgestaltung zeichnet sich dadurch aus, dass das im Lichtweg folgende optische Element ein transparenter Festkörper ist und in Ebenen, in denen senkrecht zur Führungslinie des Lichtleiters liegende Querschnitte des Lichtleiters liegen, eine aus der optisch dünneren Umgebung konvex erscheinende Lichteintrittsfläche und eine plane Lichtaustrittsfläche besitzt.

Bevorzugt ist auch, dass das im Lichtweg folgende optische Element ein Hohlreflektor ist, der so angeordnet ist, dass er von aus dem Lichtleiter austretenden Licht beleuchtet wird.

Ferner ist bevorzugt, dass das im Lichtweg folgende optische Element dazu eingerichtet und angeordnet ist, die mittlere Ausbreitungsrichtung des von dem Lichtleiter her einfallenden Lichtbündels nicht zu verändern.

Bevorzugt ist auch, dass das im Lichtweg folgende optische Element dazu eingerichtet und angeordnet ist, die mittlere Ausbreitungsrichtung des von dem Lichtleiter her einfallenden Lichtbündels zu verändern.

Eine weitere bevorzugte Ausgestaltung zeichnet sich dadurch aus, dass das im Lichtweg folgende optische Element eine Kombination aus einem Reflektor und einem transparenten Festkörper ist. Eine solche Kombination wird auch als katadioptrische Vorsatzoptik bezeichnet.

Bevorzugt ist auch, dass der Reflektor eine weiße oder diffus streuende Reflexionsfläche aufweist.
Ferner ist bevorzugt, dass die Leuchte wenigstens einen ersten langgestreckten Lichtleiter und einen zweiten langestreckten Lichtleiter und ein für beide Lichtleiter gemeinsames fokussierendes Element aufweist.

In einigen Fällen werden Lichtleiterkonturen auch aus mehreren Lichtleitern zusammengesetzt. Ein Grund für eine Kombination mehrerer Lichtleiter besteht darin, dass eine sehr lange Lichtleiterkontur vor allem bei Lichtleitern für weißes Licht wie Tagfahrlicht problematisch ist, weil es zu einer Farbverschiebung kommt. Die Ursache dafür liegt darin, dass weißes Licht von Leuchtdioden hauptsächlich blaue und gelbe Spektralanteile aufweist und dass die blauen Spektralanteile im Lichtleitermaterial stärker absorbiert werden als die gelben Anteile. Es kommt daher im Verlauf des Lichtleiters zu einer Gelbverschiebung des austretenden Lichts. Dieser unerwünschte Effekt tritt umso stärker in Erscheinung, je länger der Lichtleiter ist. Ersetzt man einen langen Lichtleiter durch zwei kurze, wird der gelbe Farbeindruck am Ende vermieden.

Dadurch, dass sowohl der erste Lichtleiter als auch der zweite Lichtleiter einen rechteckigen Querschnitt aufweisen und bevorzugt die beiden Lichtleiter in Längsrichtung aufeinander folgend im Lichtweg vor dem gemeinsamen fokussierenden Element angeordnet sind.

Bevorzugt ist auch, dass jeder Lichtleiter eine eigene Lichteintrittsfläche aufweist, vor der jeweils eine Licht in den betreffenden Lichtleiter einspeisende Lichtquelle angeordnet ist.

Ferner ist bevorzugt, dass die Leuchte zwei in der Richtung des aus dem Lichtleiter austretenden Lichtes vor dem fokussierenden Element verlaufende Lichtleiter aufweist, in denen das Licht in einander entgegengesetzten Richtungen propagiert und die zumindest in einem Abschnitt ihrer Länge nebeneinander her laufen, wobei die Lichtleiter gegenläufig tangential aneinander vorbei geführt werden.

Darüber hinaus werden Kombinationen von mehreren Lichtleitern verwendet, um geschlossene oder ringförmige Lichtleiterkonturen zu erzeugen. Da eine Lichtauskopplung in eine gewünschte Richtung nur dann effizient funktioniert, wenn sich das Licht im Lichtleiter mit einer zur gewünschten Richtung des ausgekoppelten Lichtes parallelen (und nicht etwa antiparallelen) Richtungskomponente ausbreitet, müssen geschlossene Konturen, die bei Kraftfahrzeugleuchten aus gestalterischen Gründen beliebig schräg im Raum stehen können, aus mindestens zwei Lichtleitern zusammengesetzt werden. Einteilige Lösungen mit eingebauten Umlenkeinheiten haben Defizite in der Homogenität der Erscheinung.

Kombinationen mehrerer Lichtleiter werden auch verwendet, um Y-artige Lichtleiterkonturen zu erzeugen. Kombinationen mehrerer Lichtleiter werden auch verwendet, um multifunktionale Lichtleiter zu verwirklichen. Unter einem multifunktionalen Lichtleiter wird dabei zum Beispiel ein Lichtleiter verstanden, mit dem sowohl eine erste Lichtverteilung als auch eine zweite Lichtverteilung erzeugt wird. Das Licht einer ersten Lichtverteilung wird dabei zum Beispiel über einen ersten Zweig der Y-Anordnung in den Lichtleiter eingespeist. Das Licht der zweiten Lichtverteilung wird dabei zum Beispiel über einen zweiten Zweig der der Y-Anordnung in den Lichtleiter eingespeist. Darüber hinaus werden Kombinationen mehrerer Lichtleiter auch verwendet, um sogenannte animierte Lichtleiter zu verwirklichen. Unter einem animierten Lichtleiter wird dabei zum Beispiel ein nach Art eines Lauflichtes wischendes Blinklicht verstanden, bei dem eine Lichteinspeisung mehrerer Lichtleiter zeitlich gestaffelt aktiviert wird.

Bevorzugt ist auch, dass die Leuchte eine Schlitzblende mit einer langgestreckten Öffnung aufweist, die über den Abschnitt der Länge vor der Lichtaustrittsfläche der beiden aneinander vorbeigeführten Lichtleiter verläuft.

Ferner ist bevorzugt, dass die Öffnung der Schlitzblende auch außerhalb des Abschnitts vor der Lichtaustrittsfläche von wenigstens einem der beiden Lichtleiter verläuft.

Bevorzugt ist auch, dass die Öffnung der Schlitzblende über die Länge der Öffnung eine konstante Breite aufweist. Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, die nur durch die Ansprüche limitiert ist, zu verlassen. Ausführungsbeispiele der Erfindung sind in den Zeichnungen dargestellt und werden in der nachfolgenden Beschreibung näher erläutert.

Dabei zeigen, jeweils in schematischer Form:
- Figur 1: eine Seitenansicht einer bekannten Anordnung einer Lichtquelle und eines stabförmigen Lichtleiters;
- Figur 2: einen Querschnitt eines hier runden Lichtleiters mit einer senkrecht zur Hauptausbreitungsrichtung des Lichtes im Lichtleiter liegenden Schnittebene;
- Figur 3: eine perspektivische Darstellung eines Beispiels einer Kraftfahrzeugleuchte;
- Figur 4: eine Anordnung eines Lichtleiters mit einer ersten Ausgestaltung eines fokussierenden Elements;
- Figur 5: eine Anordnung eines Lichtleiters mit einer zweiten Ausgestaltung eines fokussierenden Elements;
- Figur 6: eine alternative Anordnung eines Lichtleiters mit einem fokussierenden Element;
- Figur 7: eine erfindungsgemäße Anordnung mit zwei Lichtleitern und einem für beide Lichtleiter gemeinsamen fokussierenden Element;
- Figur 8: eine erfindungsgemäße Kombination von zwei rechteckigen Lichtleitern zu einer im Vergleich zu den Längen der Einzellichtleiter längeren Struktur;
- Figur 9: eine Ansicht der leuchtenden Lichtaustrittsfläche eines fokussierenden Elements einer erfindungsgemäßen Anordnung aus zwei Lichtleitern und einem für beide Lichtleiter gemeinsamen fokussierenden Elements;
- Figur 10: eine räumliche Darstellung eines möglichen Verlaufs einer solchen erfindungsgemäßen Anordnung im Raum für den Fall einer Anordnung in einem linken Frontscheinwerfer;
- Figur 11: eine Seitenansicht des Gegenstands der Figur 4 zusammen mit einer zusätzlichen Blende; und
- Figur 12: eine Seitenansicht einer erfindungsgemäßen Anordnung aus zwei aneinander vorbeilaufenden rechteckigen Lichtleitern mit einer Blende.

Dabei bezeichnen gleiche Bezugszeichen in verschiedenen Figuren jeweils gleiche oder zumindest ihrer Funktion nach vergleichbare Elemente.

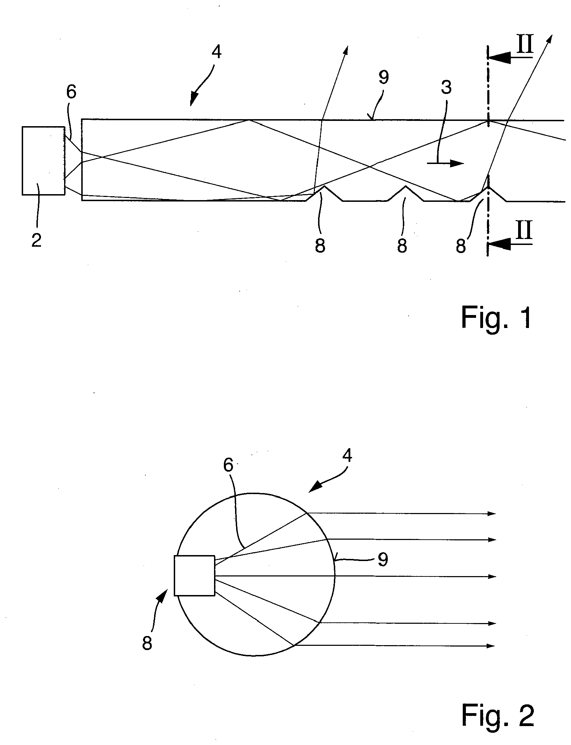

Fig. 1 zeigt im Einzelnen eine bekannte Anordnung aus einer Lichtquelle 2 und einem Lichtleiter 4 von der Seite, womit eine Blickrichtung gemeint ist, die quer zur Hauptausbreitungsrichtung 3 des Lichtes im Lichtleiter liegt.

Der Lichtleiter wird mit von der Lichtquelle ausgehendem Licht 6 gespeist. Dieses Licht wird beim Gegenstand der Figur 1 an einer Stirnseite des Lichtleiters in denselben eingekoppelt und in dessen Innerem durch an Wänden des Lichtleiters auftretende interne Totalreflexionen nahezu verlustfrei weitergeleitet. Eine Vielzahl von optischen Auskoppelelementen 8 lenkt Teile des Lichts dann so um, dass es im Folgenden an einer Grenzfläche 9 so steil auftrifft, dass es dort keine interne Totalreflexion mehr erfährt, sondern aus dem Lichtleiter austritt und entsprechend einen Beitrag zur Lichtverteilung leistet.

Figur 2 zeigt einen Querschnitt des Lichtleiters 4 aus der Figur 1 aus einer Blickrichtung, die der Hauptausbreitungsrichtung des Lichtes im Lichtleiter entspricht. Wie eingangs erwähnt wurde, ist es im Allgemeinen wichtig, dass das ausgekoppelte Lichtbündel einen kleineren Öffnungswinkel aufweist als das von der Lichtquelle ausgehende Licht.

Um das Licht der Lichtquelle zum Beispiel in einen Winkelbereich einer regelkonformen Signallichtverteilung zu konzentrieren, ist das quer zur Hauptlichtausbreitungsrichtung des Lichtes im Lichtleiter quer liegende Querschnittsprofil des Lichtleiters im Frontbereich überwölbt oder mit einem Radius ausgeführt. Der Frontbereich ist dabei der Bereich, der von der Lichtaustrittsfläche 9 des Lichtleiters 4 begrenzt wird. Das mit den Auskoppelelementen 8 umgelenkte Licht wird durch in dieser Fläche 9 beim Lichtaustritt auftretende Lichtbrechung gebündelt.

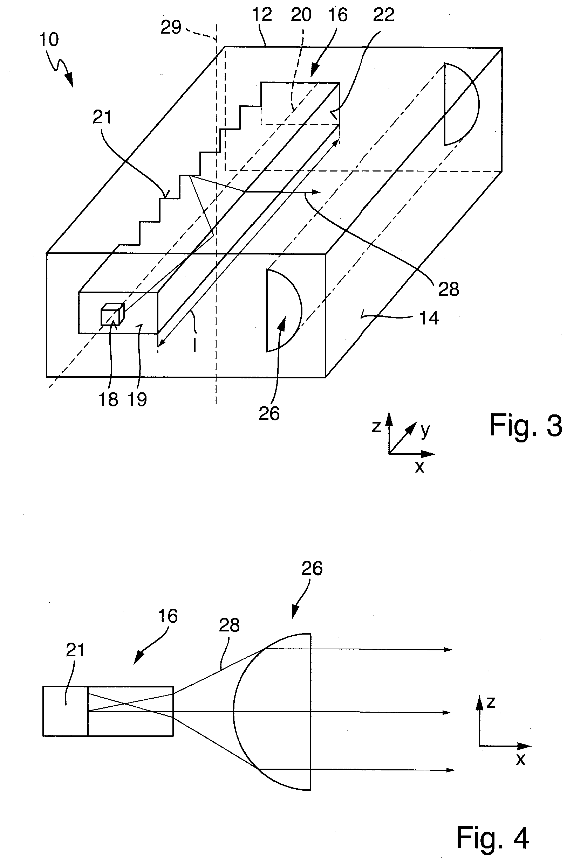

Im Einzelnen zeigt die Figur 3 eine Kraftfahrzeugbeleuchtungseinrichtung 10 mit einem Gehäuse 12, das von einer transparenten Lichtscheibe 14 abgedeckt wird. Die Beleuchtungseinrichtung erfüllt wenigstens eine Signallichtfunktion und weist ein dazu eingerichtetes oder zumindest dazu beitragendes Lichtmodul auf. Die Beleuchtungseinrichtung kann zusätzlich zu einem solchen Lichtmodul ein weiteres Lichtmodul oder mehrere weitere Lichtmodule aufweisen, die zur Erfüllung der Lichtfunktion beitragen oder die eine oder mehrere weitere Signallichtfunktionen und/oder Scheinwerferlichtfunktionen erfüllen. Die Erfindung betrifft dabei ein Modul, das eine Signallichtfunktion erfüllt. Die Beleuchtungseinrichtung 10 wird daher im Folgenden auch als Kraftfahrzeugleuchte bezeichnet.

Das Lichtmodul der Beleuchtungseinrichtung aus der Figur 3 weist einen langgestreckten Lichtleiter 16 und eine Lichtquelle 18 auf.

Die Lichtquelle ist gegenüber einer Lichteintrittsfläche 19 des Lichtleiters so angeordnet, dass von ihr ausgehendes Licht in den Lichtleiter 16 eintritt. Die Lichtquelle ist bevorzugt eine Leuchtdiode mit ebener Lichtaustrittsfläche oder eine Anordnung mehrerer solcher Leuchtdioden. Sie ist bevorzugt an einer schmalen Stirnseite 19 des Lichtleiters angeordnet. Dazu ist die Leuchtdiode in Bezug auf den Lichtleiter bevorzugt so angeordnet, dass ihre Lichtaustrittsfläche senkrecht zur Führungslinie des Lichtleiters liegt. Die Lichtaustrittsfläche der Leuchtdiode liegt bevorzugt in einem Abstand vor der Lichteintrittsfläche des Lichtleiters, der kleiner als 1 mm ist. Der Lichtleiter weist Auskoppelelemente 21 auf, an denen Licht so umgelenkt wird, dass es aus einer Lichtaustrittsfläche des Lichtleiters austritt. Die Auskoppelelemente sind meist so ausgeführt, dass die Helligkeit entlang des Lichtleiters möglichst einheitlich erscheint, was im Folgenden auch als homogenes Erscheinungsbild bezeichnet wird.

Der Lichtleiter 16 ist dazu eingerichtet, dieses Licht in seinem Inneren durch an Grenzflächen des Lichtleiters erfolgende interne Totalreflexionen entlang einer durch die äußere Form des Lichtleiters vorgegebenen und innerhalb des Lichtleiters verlaufenden Führungslinie 20 des Lichtleiters entlang zu leiten. Die Führungslinie kann man sich als mittlere Faser des Lichtleiters vorstellen. Sie stellt so etwas wie eine geglättete Hauptlichtausbreitungsrichtung im Lichtleiter dar. Der Lichtleiter weist eine Lichtaustrittsfläche 22 auf, über die an Auskoppelelementen 21 des Lichtleiters umgelenktes Licht aus dem Lichtleiter austritt. Die Auskoppelelemente können prismenartig sein aber auch Radien oder Freiformflächen aufweisen.

Die Lichtaustrittsfläche verläuft in einer quer zur Führungslinie 20 liegenden Raumrichtung 29 geradlinig. Dies unterscheidet sie deutlich von der Lichtaustrittsfläche 9 des bekannten Gegenstandes der Figuren 1 und 2. Die Führungslinie des Lichtleiters aus der Figur 2 würde zum Beispiel senkrecht auf der Zeichnungsebene der Figur 2 stehen, so dass jede in der Zeichnungsebene liegende Richtung quer zu dieser Führungslinie verläuft. Es ist aus der Figur 2 unmittelbar ersichtlich, dass die Lichtaustrittsfläche 9 dort aufgrund ihrer Krümmung zu keiner quer zur Führungslinie liegenden Richtung geradlinig verläuft.

Eine Verkleinerung des Öffnungswinkels des Lichtbündels, die beim Gegenstand der Figuren 1 und 2 durch die gekrümmte Lichtaustrittsfläche erfolgt, wird erfindungsgemäß dadurch herbeigeführt, dass die Leuchte ein fokussierendes Element 26 aufweist, das im Lichtweg des über die Lichtaustrittsfläche 22 ausgetretenen Lichtes 28 liegt und sich dabei über die ganze Länge l der Lichtaustrittsfläche 22 erstreckt und dazu eingerichtet ist, den Öffnungswinkel des Lichtbündels, in dem sich das aus der Lichtaustrittsfläche ausgetretene Licht ausbreitet, zu verringern.

Die Führungslinie verläuft beim Gegenstand der Figur 3 parallel zu einer y-Richtung eines zunächst willkürlich festgelegten, rechtshändigen Koordinatensystems, das neben der y-Richtung noch eine x-Richtung und eine z-Richtung auszeichnet. Die x-Richtung steht senkrecht auf der Lichtaustrittsfläche und der Führungslinie und weist in die Hauptlichtaustrittsrichtung aus dem Lichtleiter. Die z-Richtung steht senkrecht auf der x-Richtung und der y-Richtung.

Die Erfindung erlaubt insbesondere auch Ausgestaltungen langgestreckter Lichtleiter mit gekrümmt verlaufenden Führungslinien.

Die quer zur Führungslinie liegenden Lichtleiterquerschnitte sind rechteckig. In diesem Fall tritt beim Lichtaustritt aus dem Lichtleiter keine Verringerung des Öffnungswinkels des aus dem Lichtleiterinneren auf die Lichtaustrittsfläche einfallenden Lichtbündels auf. Im Gegenteil, bei Übertritt in die im Vergleich zum Lichtleitermaterial optisch dünnere Luft tritt eine Aufweitung auf. In diesem Fall erfolgt eine Verringerung des Öffnungswinkels des aus dem Lichtleiterinneren auf die Lichtaustrittsfläche einfallenden Lichtbündels nur durch im Lichtweg folgende optische Elemente. Die Verringerung erfolgt insbesondere bevorzugt nur durch das fokussierende Element 26. Das im Lichtweg folgende optische Element 26 ist hier ein transparenter Festkörper, der in Ebenen, in denen senkrecht zur Führungslinie des Lichtleiters liegende Querschnitte des Lichtleiters liegen, eine plane Lichteintrittsfläche und eine aus der optisch dünneren Umgebung konvex erscheinende Lichtaustrittsfläche besitzt.

In einer weiteren bevorzugten Ausgestaltung weist die Lichtaustrittsfläche des Lichtleiters, wenn man sie von dem im Lichtweg folgenden fokussierenden optischen Element aus betrachtet, eine konvexe Krümmung in quer zur Führungslinie liegenden Ebenen auf. In diesem Fall verteilt sich die Verringerung des Öffnungswinkels des aus dem Lichtleiterinneren auf die Lichtaustrittsfläche einfallenden Lichtbündels auf eine erste, an der Lichtaustrittsfläche erfolgende Verringerung und auf eine zweite, durch das im Lichtweg folgende optische Element erfolgende Verringerung.

Figur 4 zeigt eine Anordnung eines Lichtleiters 16 und eines im Lichtweg folgenden fokussierenden optischen Elements 26 einer Beleuchtungseinrichtung mit einer alternativen Ausgestaltung des im Lichtweg folgenden optischen Elements.

Bei dieser Ausgestaltung ist das im Lichtweg folgende optische Element 26 ein transparenter Festkörper, der in Ebenen, in denen senkrecht zur Führungslinie des Lichtleiters liegende Querschnitte des Lichtleiters liegen, eine aus der optisch dünneren Umgebung konvex erscheinende Lichteintrittsfläche und eine plane Lichtaustrittsfläche besitzt. Das optische Element ist so angeordnet, dass es die mittlere Ausbreitungsrichtung des von dem Lichtleiter her einfallenden Lichtbündels nicht verändert.

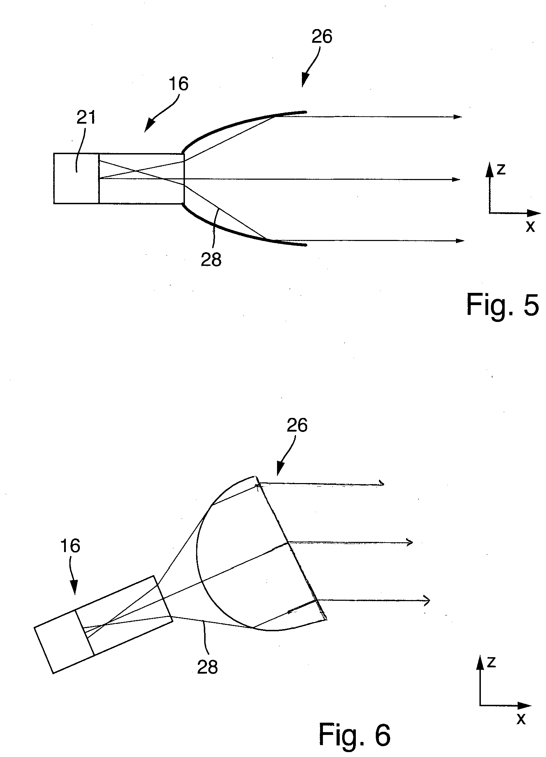

Figur 5 zeigt eine Anordnung eines Lichtleiters 16 und eines im Lichtweg folgenden fokussierenden optischen Elements 26 einer Beleuchtungseinrichtung mit einer weiteren alternativen Ausgestaltung des im Lichtweg folgenden optischen Elements. Bei dieser Ausgestaltung ist das im Lichtweg folgende optische Element 26 ein Hohlreflektor, der so angeordnet ist, dass er von aus dem Lichtleiter austretenden Licht 28 beleuchtet wird. Eine Brennlinie des Reflektors verläuft dabei bevorzugt in einem konstanten Abstand zur Führungslinie des Lichtleiters. Bevorzugt ist auch, dass die Brennlinie innerhalb der Lichtaustrittsfläche des Lichtleiters verläuft.

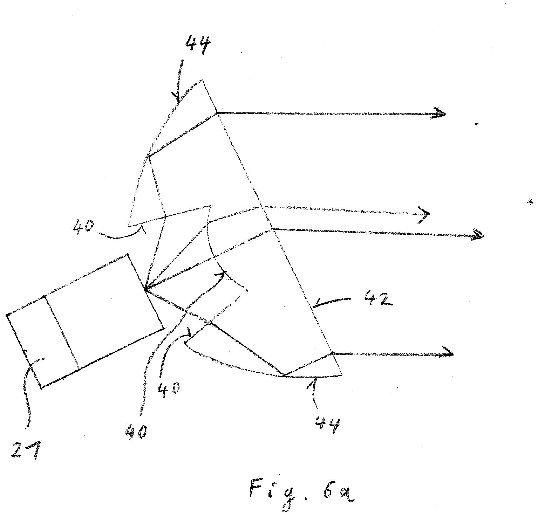

Figur 6 zeigt eine Anordnung eines Lichtleiters 16 und eines im Lichtweg folgenden fokussierenden optischen Elements 26 einer Beleuchtungseinrichtung mit einer weiteren alternativen Ausgestaltung des im Lichtweg folgenden optischen Elements. Bei dieser Ausgestaltung ist das im Lichtweg folgende optische Element ein transparenter Festkörper und besitzt in Ebenen, in denen senkrecht zur Führungslinie des Lichtleiters liegende Querschnitte des Lichtleiters liegen, eine aus der optisch dünneren Umgebung konvex erscheinende Lichteintrittsfläche und eine plane Lichtaustrittsfläche.

Im Unterschied zum Gegenstand der Figur 4 ist das optische Element beim Gegenstand der Figur 6 so angeordnet, dass es die mittlere Ausbreitungsrichtung des von dem Lichtleiter her einfallenden Lichtbündels 28 verändert. Beim Gegenstand der Figur 6 ist die plane Lichtaustrittsfläche gegenüber dem vom Inneren des optischen Elements her einfallenden Licht verkippt, so dass die Richtungen des einfallenden Lichtes und die Normale der Lichtaustrittsfläche nicht parallel sind, wie es beim Gegenstand der Figur 4 der Falls ist, sondern einen Winkel ungleich Null miteinander einschließen.

Losgelöst von diesem speziellen Ausführungsbeispiel gilt, dass die Ausrichtung der fokussierenden Elemente nicht zwingend symmetrisch zur optischen Achse ist. Vielmehr kann die Lichtaustrittsfläche der Lichtscheibe in weiten Bereichen verkippt sein. Sie kann damit der gestalterischen Freiheit des Stylings folgen.

Der Lichtleiter 16 und die fokussierende Lichteintrittsfläche des optischen Elements 26 verkippen sich dann entsprechend den zugrundeliegenden Brechungsgesetzen.

Bei einer Ausgestaltung, die einen Reflektor aufweist, werden dessen reflektierende Flächen bevorzugt entsprechend gestuft verwirklicht, um der Verkippung zu folgen.

In einer weiteren Ausgestaltung bildet eine Kombination aus einem Reflektor und einem transparenten Festkörper das im Lichtweg folgende optische Element 26. Bei einer Kombination von transparentem Festkörper und Reflektor zeichnet sich eine weitere Ausgestaltung dadurch aus, dass der Reflektor weiß oder diffus streuend ausgeführt ist. Dadurch wird zum Beispiel die eigentliche regelkonforme Lichtverteilung um einen homogenen Hintergrund erweitert, so dass die Leuchte auch aus Raumwinkelbereichen sichtbar ist, die außerhalb des Raumwinkelbereichs der regelkonformen Lichtverteilung liegen.

Der transparente Festköper Lichtscheibe ist in einer weiteren Ausgestaltung mit einer bündelnden Fresnel-Struktur versehen. Der transparente Festkörper kann in allen Ausführungsbeispielen als Linse (Lichtbrechung beim Eintritt und/oder Austritt, keine interne Totalreflexion) oder als Lichtleiter (interne Totalreflexion mit oder ohne Lichtbrechung beim Eintritt und/oder Austritt) verwirklicht sein.

Bevorzugt ist eine Ausgestaltung, wie sie in der Figur 6a dargestellt ist. Eine solche Ausgestaltung wird auch als katadioptrische Vorsatzoptik bezeichnet. Ihre Lichteintrittsfläche 40 und die Lichtaustrittsfläche 42 ist so gestaltet, dass sie beim Lichteintritt und beim Lichtaustritt jeweils eine erwünschte Lichtbrechung bewirkt, wie es von einer Linse bekannt ist. Ihre Seitenflächen 44 sind so geformt, dass an ihnen interne Totalreflexionen auftreten, die das dort einfallende Lichtbündel wie ein Hohlspiegelreflektor umformen. Insbesondere der zentrale Bereich stellt eine Linse dar.

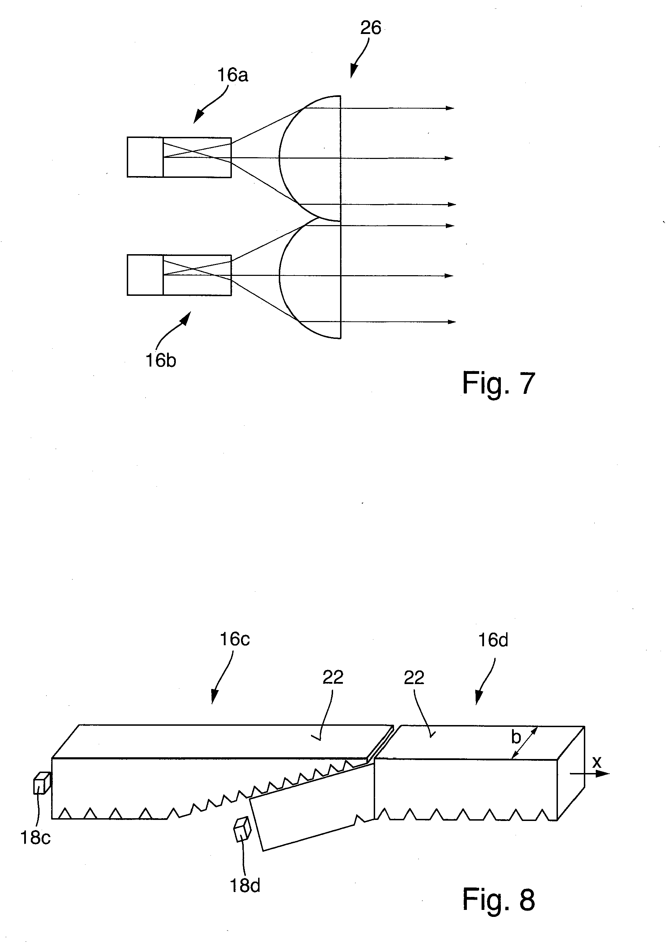

Figur 7 zeigt eine erfindungsgemäße Anordnung mit zwei Lichtleitern 16a, 16b und einem für beide Lichtleiter gemeinsamen fokussierenden Element 26. Die Figur 7 verdeutlicht damit, dass auch mehrere dünne Lichtleiter nebeneinander her laufen und mit den fokussierenden Elementen entsprechend abgebildet werden können. Damit lassen sich auch flächenhafte Leuchten mit sehr guter Homogenität realisieren.

Figur 8 zeigt eine Kombination von zwei rechteckigen Lichtleitern 16c, 16d zu einer im Vergleich zu den Längen der Einzellichtleiter längeren Struktur. Jeder Lichtleiter weist eine eigene Lichteintrittsfläche auf, vor der jeweils eine Licht in den betreffenden Lichtleiter einspeisende Lichtquelle 18c, 18d angeordnet ist. Auch hier gilt, dass eine solche Lichtquelle bevorzugt eine oder mehrere Leuchtdioden mit ebener Lichtaustrittsfläche aufweist. Wie die Figur 8 zeigt, lassen sich die Lichtaustrittsflächen beider Lichtleiter praktisch überganslos zu einer im leuchtenden Zustand zusammenhängend erscheinenden Lichtaustrittsfläche 22 zusammenfügen. Dies ist ein Vorteil der Rechteckform des zur Hauptlichtausbreitungsrichtung x senkrecht liegenden Lichtleiterquerschnitts, weil dieser aufgrund der konstanten Breite b einen Transport einer Lichtmenge bis in das Ende des sich in Lichtrichtung verjüngenden Lichtleiters 18c der beiden Lichtleiter ermöglicht, die zur Erzeugung einer homogenen Ausleuchtung der Lichtaustrittsfläche bis zu deren dem anderen Lichtleiter 18d zugewandten Ende ausreichend ist.

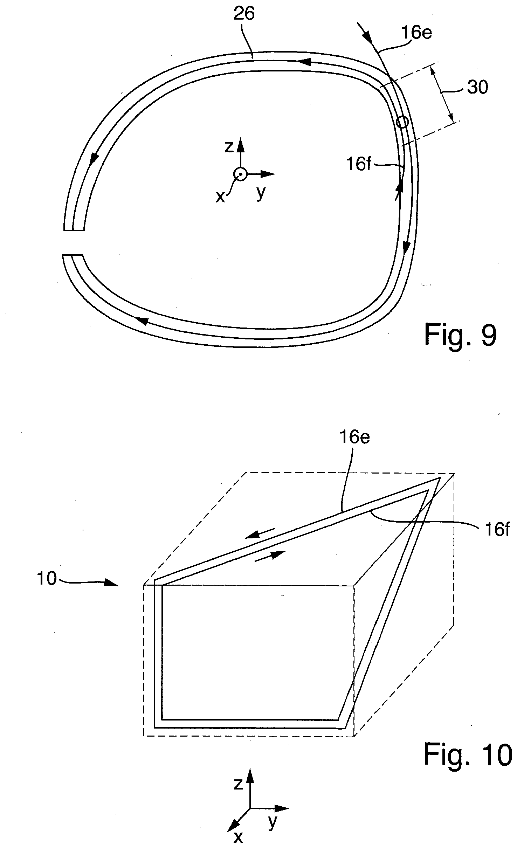

Figur 9 zeigt eine Ansicht der leuchtenden Lichtaustrittsfläche eines fokussierenden Elements einer Anordnung aus zwei Lichtleitern und einem für beide Lichtleiter gemeinsamen fokussierenden Element. Mit Blick auf die Richtungsfestlegung gemäß der Figur 3 entspricht die Blickrichtung, bei der sich die Darstellung der Figur 9 ergibt, der negativen x-Richtung. Die Figur 9 zeigt insbesondere zwei hinter dem fokussierenden Element 26 verlaufende Lichtleiter 16e, 16f , in denen das Licht in einander entgegengesetzten Richtungen propagiert und die zumindest abschnittsweise, im Fall der Figur 9 im Abschnitt 30, nebeneinander her laufen. Eine Ausgestaltung zeichnet sich dadurch, dass die Leuchte zwei hinter dem fokussierenden Element 26 verlaufende Lichtleiter aufweist, in denen das Licht in einander entgegengesetzten Richtungen propagiert und die zumindest abschnittsweise nebeneinander her laufen, wobei die Lichtleiter gegenläufig tangential aneinander vorbei geführt werden. Wie im Folgenden noch erläutert wird, lässt sich dadurch auf der gesamten Ringkontur eine gleichmäßige Ausleuchtung erreichen.

Figur 10 zeigt eine räumliche Darstellung eines möglichen Verlaufs einer solchen Anordnung im Raum für den Fall einer Anordnung in einem linken Frontscheinwerfer. In diesem Fall entspricht die x-Richtung der zur Fahrzeuglängsachse parallelen Fahrtrichtung, während die y-Richtung parallel zur Fahrzeugquerachse nach links und die z-Richtung parallel zur Fahrzeughochachse noch oben weist. Die Leuchte weist eine Lichtleiterstruktur auf, die eine geschlossene Schleife mit zwei parallel aneinander vorbei laufenden Lichtleitern im Raum bildet. Ein Teil der Struktur verläuft in einer zur y-z-Ebene parallelen ersten Ebene. Ein weiterer Teil verläuft in einer zur x-z-Ebene parallelen Ebene und ein weiterer Teil verläuft in einer zur x-y-Ebene parallelen dritten Ebene. Die Hauptabstrahlrichtung soll in allen drei Teilen in die x-Richtung weisen. Die Lichtleiterstruktur wird durch zwei Lichtleiter 16e, 16f gebildet, die zumindest in der zweiten Ebene und in der dritten Ebene nebeneinander her laufen und in denen das Licht in entgegengesetzten Richtungen propagiert.

Es ist so, dass eine Auskopplung in die gewünschte x-Richtung vergleichsweise effizienter erfolgt, wenn das auszukoppelnde Licht im Lichtleiter eine in die x-Richtung weisende Richtungskomponente besitzt, und vergleichsweise weniger effizient erfolgt, wenn das auszukoppelnde Licht im Lichtleiter eine in die die negative x-Richtung weisende Richtungskomponente besitzt.

Für das in der Lichtleiterstruktur im Uhrzeigersinn propagierende Licht bedeutet dies, dass es in der x-y-Ebene weniger effizient in die x-Richtung auskoppelbar ist als in der der x-z-Ebene. Als Folge würde sich für den Betrachter ein inhomogenes Erscheinungsbild ergeben, bei dem die in der x-y-Ebene liegende Struktur weniger hell leuchtet.

Für das in der Lichtleiterstruktur entgegen dem Uhrzeigersinn propagierende Licht bedeutet dies, dass es in der x-z-Ebene weniger effizient in die x-Richtung auskoppelbar ist als in der der x-y-Ebene. Als Folge würde sich für den Betrachter ein inhomogenes Erscheinungsbild ergeben, bei dem die in der x-z-Ebene liegende Struktur weniger hell leuchtet.

Dadurch dass die Lichtleiterstruktur in diesen Ebenen nebeneinander her laufende Lichtleiter aufweist, in denen das Licht in entgegengesetzten Richtungen propagiert, gleichen sich die Inhomogenitäten gerade aus: Der Lichtleiter, in dem das Licht im Uhrzeigersinn propagiert, erscheint dort heller, wo der andere Lichtleiter weniger hell erscheint und umgekehrt.

Figur 10 zeigt insofern eine Ausgestaltung, die sich dadurch auszeichnet, dass die Leuchte zwei in der Richtung des aus dem Lichtleiter austretenden Lichtes vor dem fokussierenden Element verlaufende Lichtleiter aufweist, in denen das Licht in einander entgegengesetzten Richtungen propagiert und die zumindest in einem Abschnitt ihrer Länge nebeneinander her laufen, wobei die Lichtleiter gegenläufig tangential aneinander vorbei geführt werden.

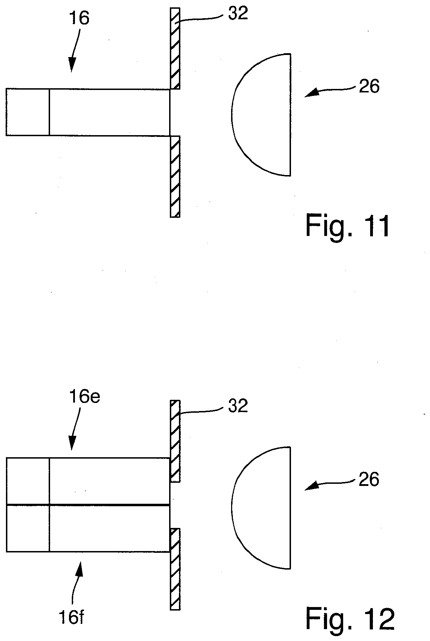

Figur 11 zeigt eine Seitenansicht des Gegenstands der Figur 4 zusammen mit einer zusätzlichen Blende 32, und Figur 12 zeigt eine Seitenansicht einer Anordnung aus zwei aneinander vorbeilaufenden rechteckigen Lichtleitern 16e, 16f mit einer Blende 32.

Der Umstand, dass die Lichtleiter bei der erfindungsgemäßen Leuchte dünner sein dürfen als beim Stand der Technik, hat bei der Nebeneinanderherführung den großen Vorteil, dass die Lichtleiter mit kleineren Radien geführt werden können, was weniger Bauraum verbraucht.

Der Umstand, dass die Lichtleiter in den zur Hauptlichtausbreitungsrichtung senkrechten Querschnitten rechteckig sind, hat den Vorteil, dass zwei Lichtleiter nebeneinander verlaufen können und der zusammengesetzte Lichtaustritt genauso aussieht wie der Lichtaustritt eines einzelnen Lichtleiters. Der einheitliche Eindruck kann noch verbessert werden, wenn eine einheitliche Schlitzblende zum Einsatz kommt, die dort, wo die Lichtleiterstruktur einer Leuchte nur aus einem Lichtleiter besteht, genauso breit geöffnet ist wie dort, wo zwei Lichtleiter der Lichtleiterstruktur in kleinstmöglichem Abstand nebeneinander her laufen.

Die Figuren 11 und 12 veranschaulichen eine Ausgestaltung, bei der die Leuchte eine Schlitzblende mit einer langgestreckten Öffnung aufweist, die über den Abschnitt der Länge vor der Lichtaustrittsfläche der beiden aneinander vorbeigeführten Lichtleiter verläuft.

Dabei verläuft die Öffnung der Schlitzblende auch außerhalb des Abschnitts vor der Lichtaustrittsfläche von wenigstens einem der beiden Lichtleiter. Die Öffnung der Schlitzblende weist über die Länge der Öffnung eine konstante Breite auf.

## Patentansprüche

1. Kraftfahrzeugleuchte (10) mit wenigstens einem langgestreckten Lichtleiter (16), der dazu eingerichtet ist, Licht in seinem Inneren durch an Grenzflächen des Lichtleiters (16) erfolgende interne Totalreflexionen entlang einer durch die äußere Form des Lichtleiters (16) vorgegebenen und innerhalb des Lichtleiters (16) verlaufenden Führungslinie (20) des Lichtleiters (16) entlang zu leiten, wobei der Lichtleiter (16) eine Lichtaustrittsfläche (22) aufweist, die Leuchte (10) ein fokussierendes Element (26) aufweist, das im Lichtweg des über die Lichtaustrittsfläche (22) ausgetretenen Lichtes (28) liegt und sich dabei über die ganze Länge der Lichtaustrittsfläche (22) erstreckt und dazu eingerichtet ist, den Öffnungswinkel des Lichtbündels, in dem sich das aus der Lichtaustrittsfläche (22) ausgetretene Licht (28) ausbreitet, zu verringern, wobei die Lichtaustrittsfläche (22) des Lichtleiters (16) in einer quer zur Führungslinie (20) liegenden Raumrichtung (29) geradlinig verläuft, **dadurch gekennzeichnet, dass** die quer zur Führungslinie (20) liegenden Lichtleiterquerschnitte rechteckig sind und dass die Leuchte (10) wenigstens einen ersten langgestreckten Lichtleiter (16a,16c,16e) und einen zweiten langgestreckten Lichtleiter (16b, 16d, 16f) und ein für beide Lichtleiter (16a, 16b, 16c, 16d, 16e, 16f) gemeinsames fokussierendes Element (26) aufweist.

2. Leuchte (10) nach Anspruch 1, **dadurch gekennzeichnet, dass** die Lichtaustrittsfläche (22), wenn man sie von dem im Lichtweg folgenden fokussierenden optischen Element (26) aus betrachtet, eine konvexe Krümmung in quer zur Führungslinie (20) liegenden Ebenen aufweist.

3. Leuchte (10) nach einem der vorhergehenden Ansprüche, **dadurch gekennzeichnet, dass** das im Lichtweg folgende optische Element (26) ein transparenter Festkörper ist und in Ebenen, in denen senkrecht zur Führungslinie (20) des Lichtleiters (16) liegende Querschnitte des Lichtleiters (16) liegen, eine plane Lichteintrittsfläche (19) und eine aus der optisch dünneren Umgebung konvex erscheinende Lichtaustrittsfläche (22) besitzt.

4. Leuchte (10) nach einem der Ansprüche 1 oder 2, **dadurch gekennzeichnet, dass** das im Lichtweg folgende optische Element (26) ein transparenter Festkörper ist und in Ebenen, in denen senkrecht zur Führungslinie des Lichtleiters (16) liegende Querschnitte des Lichtleiters (16) liegen, eine aus der optisch dünneren Umgebung konvex erscheinende Lichteintrittsfläche (19) und eine plane Lichtaustrittsfläche (22) besitzt.

5. Leuchte (10) nach einem der Ansprüche 1 oder 2, **dadurch gekennzeichnet, dass** das im Lichtweg folgende optische Element (26) ein Hohlreflektor ist, der so angeordnet ist, dass er von aus dem Lichtleiter (16) austretenden Licht (28) beleuchtet wird.

6. Leuchte (10) nach einem der vorhergehenden Ansprüche, **dadurch gekennzeichnet, dass** das im Lichtweg folgende optische Element (26) dazu eingerichtet und angeordnet ist, die mittlere Ausbreitungsrichtung des von dem Lichtleiter (16) her einfallenden Lichtbündels nicht zu verändern.

7. Leuchte (10) nach einem der Ansprüche 1 bis 5, **dadurch gekennzeichnet, dass** das im Lichtweg folgende optische Element (26) dazu eingerichtet und angeordnet ist, die mittlere Ausbreitungsrichtung des von dem Lichtleiter (16) her einfallenden Lichtbündels zu verändern.

8. Leuchte (10) nach einem der vorhergehenden Ansprüche, **dadurch gekennzeichnet, dass** das im Lichtweg folgende optische Element (26) eine Kombination aus einem Reflektor und einem transparenten Festkörper ist.

9. Leuchte (10) nach Anspruch 8, **dadurch gekennzeichnet, dass** die der Reflektor eine weiße oder diffus streuende Reflexionsfläche aufweist.

10. Leuchte (10) nach Anspruch 1, **dadurch gekennzeichnet, dass** sowohl der erste Lichtleiter (16c) als auch der zweite Lichtleiter (16d) einen rechteckigen Querschnitt aufweist und die beiden Lichtleiter (16c,16d) in Längsrichtung aufeinander folgend im Lichtweg vor dem gemeinsamen fokussierenden Element (26) angeordnet sind.

11. Leuchte (10) nach Anspruch 1 oder 10, **dadurch gekennzeichnet, dass** jeder Lichtleiter (16c,16d) eine eigene Lichteintrittsfläche (19) aufweist, vor der jeweils eine Licht in den betreffenden Lichtleiter (16c,16d) einspeisende Lichtquelle (18c,18d) angeordnet ist.

## Claims

1. A motor vehicle light (10) having at least one elongated waveguide (16), which is arranged for conducting light in its interior by means of internal total reflections occurring at boundary faces of the waveguide (16), along a leading line (20) of the waveguide (16), which leading line is predetermined by the outer shape of the waveguide (16) and extends inside the waveguide (16), wherein the waveguide (16) has a light exit face (22); the light (10) has a focusing element (26), which is located in the light path of the light (28) that has exited via the light exit face (22), and which extends over the entire length of the light exit face (22) and is arranged for reducing the opening angle of the light beam in which the light (28) that has exited from the light exit face (22) is propagated, and the light exit face (22) of the waveguide (16) extends rectilinearly in a spatial direction (29) located transversely to the leading line (20), **characterized in that** the waveguide cross sections located transversely to the leading line (20) are rectangular; and that the light (10) has at least a first elongated waveguide (16a, 16c, 16e) and a second elongated waveguide (16b, 16d, 16f) and one focusing element (26) shared by both waveguides (16a, 16b, 16c, 16d, 16e, 16f).

2. The light (10) of claim 1, **characterized in that** the light exit face (22), if one observes it from the focusing optical element (26) following in the light path, has a convex curvature in planes located transversely to the leading line (20).

3. The light (10) of one of the foregoing claims, **characterized in that** the optical element (26) following in the light path is a transparent solid body and, in planes in which cross sections of the waveguide (16) that are perpendicular to the leading line (20) of the waveguide (16) are located, has a plane light entry face (19) and a light exit face (22) that from the optically thinner surroundings appears convex.

4. The light (10) of one of claims 1 or 2, **characterized in that** the optical element (26) following in the light path is a transparent solid body and, in planes in which cross sections of the waveguide (16) located perpendicular to the leading line of the waveguide (16) are located, has a light entry face (19) from the optically thinner surroundings appears convex and that has a plane light exit face (22).

5. The light (10) of one of claims 1 or 2, **characterized in that** the optical element (26) following in the light path is a hollow reflector, which is arranged such that it is illuminated by light (28) exiting the waveguide (16).

6. The light (10) of one of the foregoing claims, **characterized in that** the optical element (26) following in the light path is arranged and located so as not to vary the mean propagation direction of the beam of incident light from the waveguide (16).

7. The light (10) of one of claims 1 through 5, **characterized in that** the optical element (26) following in the light path is arranged and located such as to vary the mean propagation direction of the beam of incident light from the waveguide (16).

8. The light (10) of one of the foregoing claims, **characterized in that** the optical element (26) following in the light path is a combination of a reflector and a transparent solid body.

9. The light (10) of claim 8, **characterized in that** the reflector has a white or diffusely scattering reflection surface.

10. The light (10) of claim 1, **characterized in that** both the first waveguide (16c) and the second waveguide (16d) has a rectangular cross section, and the two waveguides (16c, 16d) are located following one another in the longitudinal direction in the light path in front of the shared focusing element (26).

11. The light (10) of claim 1 or 10, **characterized in that** each waveguide (16c, 16d) has its own light entry face (19), in front of each of which a respective light source (18c, 18d) injecting light into the applicable waveguide (16c, 16d) is located.

## Revendications

1. Éclairage de véhicule automobile (10), comportant au moins une fibre optique allongée (16), qui est aménagée pour conduire de la lumière en son intérieur par des réflexions totales internes ayant lieu au niveau de surfaces limites de la fibre optique (16), le long d'une ligne de guidage (20) de la fibre optique (16) prédéfinie par la forme extérieure de la fibre optique (16) et s'étendant à l'intérieur de la fibre optique (16), dans lequel la fibre optique (16) présente une surface de sortie de lumière (22), l'éclairage (10) présente un élément de focalisation (26), qui se trouve dans la trajectoire lumineuse de la lumière (28) sortant par le biais de la surface de sortie de lumière (22) et s'étend ce faisant sur toute la longueur de la surface de sortie de lumière (22) et est aménagé pour réduire l'angle d'ouverture du faisceau de lumière, dans lequel se propage la lumière (28) sortie de la surface de sortie de lumière (22), dans lequel la surface de sortie de lumière (22) de la fibre optique (16) s'étend de manière rectiligne dans une direction spatiale (29) transversale à la ligne de guidage (20), **caractérisé en ce que** les sections transversales de fibre optique situées transversalement à la ligne de guidage (20) sont rectangulaires et que l'éclairage (10) présente au moins une première fibre optique allongée (16a, 16c, 16e) et une deuxième fibre optique allongée (16b, 16d, 16f) et un élément de focalisation (26) commun aux deux fibres optiques (16a, 16b, 16c, 16d, 16e, 16f).

2. Éclairage (10) selon la revendication 1, **caractérisé en ce que** la surface de sortie de lumière (22) présente, lorsqu'elle est observée depuis l'élément optique de focalisation suivant dans la trajectoire lumineuse (26), une courbure convexe dans des plans situés transversalement à la ligne de guidage (20).

3. Éclairage (10) selon l'une des revendications précédentes, **caractérisé en ce que** l'élément optique suivant dans la trajectoire lumineuse (26) est un corps solide transparent et possède, dans des plans dans lesquels se situent des sections transversales de la fibre optique (16) perpendiculaires à la ligne de guidage (20) de la fibre optique (16), une surface d'entrée de lumière plane (19) et une surface de sortie de lumière (22) apparaissant convexe depuis l'environnement optiquement plus mince.

4. Éclairage (10) selon l'une des revendications 1 ou 2, **caractérisé en ce que** l'élément optique suivant dans la trajectoire lumineuse (26) est un corps solide transparent et possède, dans des plans dans lesquels se situent des sections transversales de la fibre optique (16) perpendiculaires à la ligne de guidage de la fibre optique (16), une surface d'entrée de lumière (19) apparaissant convexe depuis l'environnement optiquement plus mince et une surface de sortie de lumière plane (22) .

5. Éclairage (10) selon l'une des revendications 1 ou 2, **caractérisé en ce que** l'élément optique suivant dans la trajectoire lumineuse (26) est un réflecteur creux, qui est agencé de telle sorte qu'il est éclairé par de la lumière (28) sortant de la fibre optique (16).

6. Éclairage (10) selon l'une des revendications précédentes, **caractérisé en ce que** l'élément optique suivant dans la trajectoire lumineuse (26) est aménagé et agencé pour ne pas modifier la direction de propagation moyenne du faisceau de lumière incident depuis la fibre optique (16).

7. Éclairage (10) selon l'une des revendications 1 à 5, **caractérisé en ce que** l'élément optique suivant dans la trajectoire lumineuse (26) est aménagé et agencé pour modifier la direction de propagation moyenne du faisceau de lumière incident depuis la fibre optique (16).

8. Éclairage (10) selon l'une des revendications précédentes, **caractérisé en ce que** l'élément optique suivant dans la trajectoire lumineuse (26) est une combinaison d'un réflecteur et d'un corps solide transparent.

9. Éclairage (10) selon la revendication 8, **caractérisé en ce que** le réflecteur présente une surface de réflexion à rayonnement diffus ou blanche.

10. Éclairage (10) selon la revendication 1, **caractérisé en ce qu'**aussi bien la première fibre optique (16c) que la deuxième fibre optique (16d) présentent une section transversale rectangulaire et **en ce que** les deux fibres optiques (16c, 16d) sont agencées avant l'élément de focalisation commun (26) en se suivant l'une l'autre dans la direction longitudinale dans la trajectoire lumineuse.

11. Éclairage (10) selon la revendication 1 ou 10, **caractérisé en ce que** chaque fibre optique (16c, 16d) présente une surface d'entrée de lumière propre (19), avant laquelle est agencée respectivement une source de lumière (18c, 18d) alimentant en lumière la fibre optique (16c, 16d) concernée.
